**Europäisches Patentamt**

**European Patent Office**

**Office européen des brevets**

(19)

(11) Veröffentlichungsnummer: **0 167 125 B1**

(12) **EUROPÄISCHE PATENTSCHRIFT**

(45) Veröffentlichungstag der Patentschrift:
03.05.89

(51) Int. Cl.⁴: **H 04 L 11/00, H 04 M 3/36**

(21) Anmeldenummer: **85108027.5**

(22) Anmeldetag: **28.06.85**

(54) **Verfahren und Schaltungsanordnung zur statistischen Erfassung von in einer Fernmeldevermittlungsanlage ablaufenden vermittlungstechnischen Steuerungsvorgängen.**

(30) Priorität: **03.07.84 DE 3424465**

(43) Veröffentlichungstag der Anmeldung:
**08.01.86 Patentblatt 86/2**

(45) Bekanntmachung des Hinweises auf die Patenterteilung:
**03.05.89 Patentblatt 89/18**

(84) Benannte Vertragsstaaten:
**AT CH DE IT LI NL SE**

(56) Entgegenhaltungen:
**DE-A- 2 813 961**

**PATENT ABSTRACTS OF JAPAN, Band 6, Nr. 100 (P-121)[978], 9. Juni 1982; & JP-A-57 31 021 (FUJITSU K.K.) 19-02-1982**

(73) Patentinhaber: **Siemens Aktiengesellschaft Berlin und München, Wittelsbacherplatz 2, D-8000 München 2 (DE)**

(72) Erfinder: **Gneiting, Dieter, Dipl.-Math., Gräfelfinger Strasse 70, D-8000 München 70 (DE)**

# Beschreibung

Die Erfindung betrifft ein Verfahren und eine Schaltungsanordnung zur statistischen Erfassung von in einer speicherprogrammierten Fernmeldevermittlungsanlage, insbesondere einer Daten- und Fernschreibvermittlungsanlage, während einer Zeitspanne vorgegebener Dauer ablaufenden, von mindestens einem Prozessor der Fernmeldevermittlungsanlage her entsprechend ihrer Priorität aktivierten vermittlungstechnischen Steuerungsvorgängen.

Es ist bereits bekannt, die Abläufe von für eine Datensignalübertragung über eine Datenvermittlungsanlage erforderlichen vermittlungstechnischen Steuerungsvorgängen in dieser Datenvermittlungsanlage nach bestimmten Prioritäten zu steuern (DE−AS 28 13 961). Bei diesem bekannten Verfahren werden bestimmte Anschlussschaltungen der Datenvermittlungsanlage mit Vorrang gegenüber den übrigen Systemanschlussschaltungen mit der Vermittlungsanordnung für die Abarbeitung von Vermittlungsanforderungen verbunden. Vermittlungsanforderungen der übrigen Systemanschlussschaltungen werden erst dann bearbeitet, wenn die Vermittlungsanforderungen der ausgewählten Anschlussschaltungen abgearbeitet worden sind.

Es ist Aufgabe der vorliegenden Erfindung, einen Weg zu zeigen, wie bei einem Verfahren der eingangs genannten Art mit einem geringen Steuerungsaufwand die in einer Vermittlungslage während einer Zeitspanne vorgegebener Dauer ablaufenden vermittlungstechnischen Steuerungsvorgänge statistisch erfasst werden können.

Gelöst wird die vorstehend aufgezeigte Aufgabe bei einem Verfahren der eingangs genannten Art erfindungsgemäss dadurch, dass während des Betriebes der Vermittlungsanlage mittels einer auf einer gegenüber den Prioritäten der zu erfassenden Steuerungsvorgänge höheren Priorität ablaufenden, von dem jeweiligen Prozessor her aktivierten Erfassungsroutine innerhalb der vorgegebenen Zeitspanne zu einer Vielzahl von über die Zeitspanne äquidistant verteilten Zeitpunkten der jeweils gerade ablaufende Steuerungsvorgang kurzzeitig unterbrochen wird, dass während einer solchen Unterbrechung die Priorität des gerade unterbrochenen Steuerungsvorganges ermittelt wird und dass die auf diese Weise ermittelten Prioritäten prioritätsindividuell registriert werden.

Die Erfindung bringt den Vorteil mit sich, dass durch die Erfassungsroutine sämtliche vermittlungstechnischen Steuerungsvorgänge anhand der ihnen zugeteilten Priorität erfasst werden können. Da die vermittlungstechnischen Steuerungsvorgänge für die Erfassung der Prioritäten nur kurzzeitig unterbrochen werden, ist die durch Ablauf der Erfassungsroutine bedingte zusätzliche dynamische Belastung der Vermittlungsanlage gering. Die statistische Erfassung der in der Vermittlungslage ablaufenden vermittlungstechnischen Steuerungsvorgänge ermöglicht es in einfacher Weise, die Erweiterbarkeit der Vermittlungsanlage zu überprüfen. So kann beispielsweise anhand der registrierten Verteilung der Prioritäten ermittelt werden, ob die Anzahl der mit der Vermittlungsanlage verbundenen Anschlussleitungen erhöht werden kann.

Zweckmässige Ausgestaltungen des Verfahrens gemäss der Erfindung und eine Schaltungsanordnung zur Durchführung des erfindungsgemässen Verfahrens ergeben sich aus den Unteransprüchen.

Anhand von Zeichnungen wird die Erfindung nachstehend beispielsweise näher erläutert.

Fig. 1 zeigt in einem Blockschaltbild eine Vermittlungsanlage, bei der die Erfindung angewandt ist,

Fig. 2 und 3 zeigen jeweils ein Diagramm, auf das im Zuge der Erläuterung der Erfindung eingegangen wird.

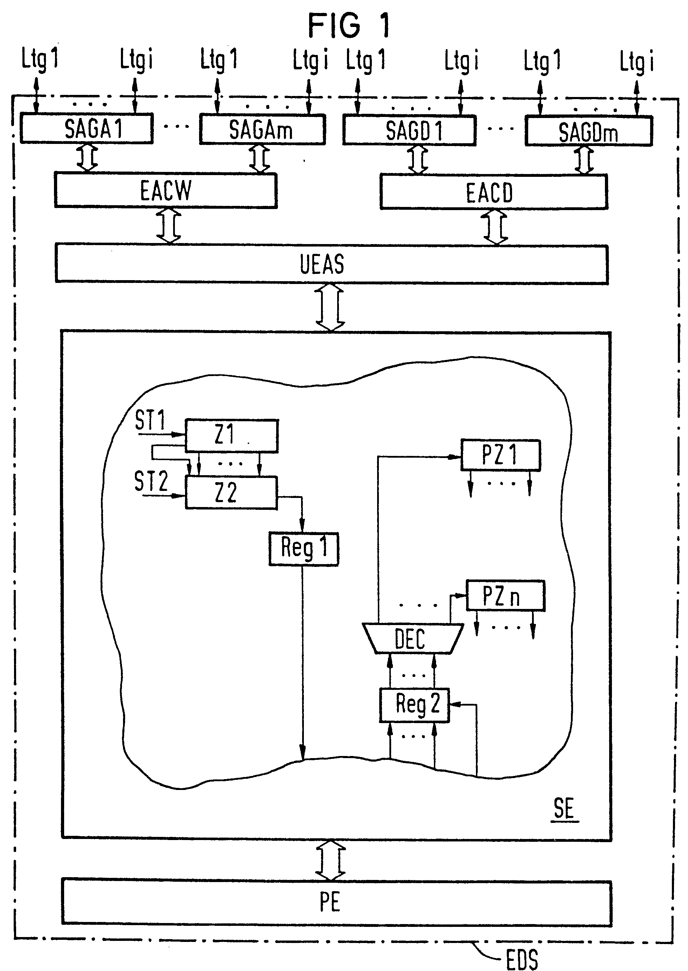

In Fig. 1 ist ausschnittweise eine Daten- und Fernschreibvermittlungsanlage EDS dargestellt. Von dieser Daten- und Fernschreibvermittlungsanlage sind lediglich zu einer Gruppe von Leitungsanschlussschaltungen gehörende Leitungsanschlussschaltungen SAGA1 bis SAGAm, zu einer zweiten Gruppe von Leitungsanschlussschaltungen gehörende Leitungsanschlussschaltungen SAGD1 bis SAGDm, den einzelnen Gruppen von Leitungsanschlussschaltungen zugehörige Eingabe-/Ausgabe-Codewandler EACW bzw. EACD, eine Übertragungsablaufsteuerung UEAS, eine Speichereinheit SE und eine Programmsteuereinheit PE angedeutet. Die mit dem Eingabe-/Ausgabe-Codewandler EACW verbundenen Leitungsanschlussschaltungen dienen dazu, digitale Datensignale polaritätswechselweise zu verarbeiten. Die mit dem anderen Eingabe-/Ausgabe-Codewandler EACD verbundenen Leitungsanschlussschaltungen dienen zur Verarbeitung von sogennanten Bitgruppen. Diese Bitgruppen sind jeweils eine Mehrzahl von Bits, beispielsweise 8 Bits, umfassende digitale Datensignale, die auch als Envelopes bezeichnet werden. Die Aufgabe dieser Eingabe-/Ausgabe-Codewandler besteht unter anderem darin, über die einzelnen Anschlussschaltungen zugeführte Signale zu dem eigentlichen Verarbeitungsteil der Daten- und Fernschreibvermittlungsanlage EDS weiterzuleiten bzw. von diesem Verarbeitungsteil her über die Leitungsanschlussschaltungen abzugebende Signale weiterzuleiten. Die Eingabe-/Ausgabe-Codewandler sind hierzu mit der Übertragungsablaufsteuerung UEAS verbunden. Diese Übertragungsablaufsteuerung steuert den Signalaustausch zwischen den Eingabe-/Ausgabe-Codewandlern und der Speichereinheit SE, die bestimmte, ihr von der Übertragungsablaufsteuerung zugeführte Signale an die Programmsteuereinheit PE weiterleitet. Ausserdem gibt die Speichereinheit SE die ihr von der Programmsteuereinheit zugeführten Signale an die Übertragungsablaufsteuerung UEAS ab.

Die in der Zeichnung angedeuteten Leitungsanschlussschaltungen sind jeweils mit einer Mehrzahl von Leitungsabschnitten Ltg1 bis Ltgi verbunden. Bei den mit den Leitungsanschlussgruppen SAGA1 bis SAGAm verbundenen Leitungsabschnitten handelt es sich dabei um Leitungsabschnitte, auf denen digitale Datensignale nach einem asynchronen Übertragungsverfahren übertragen werden. Auf den mit den übrigen Leitungsanschlussschaltungen SAGD1 bis SAGDm verbundenen Leitungsabschnitten erfolgt dagegen eine Übertragung von digitalen Datensignalen nach einem synchronen Übertragungsverfahren. Bei den genannten Leitungsabschnitten möge es sich dabei entweder um die hier dargestellten Daten- und Fernschreibvermittlungsanlage mit weiteren Vermittlungsanlagen verbindende Verbindungsleitungen oder um Teilnehmeranschlussleitungen handeln, die die Daten- und Fernschreibvermittlungsanlage mit Teilnehmerendeinrichtungen verbindet.

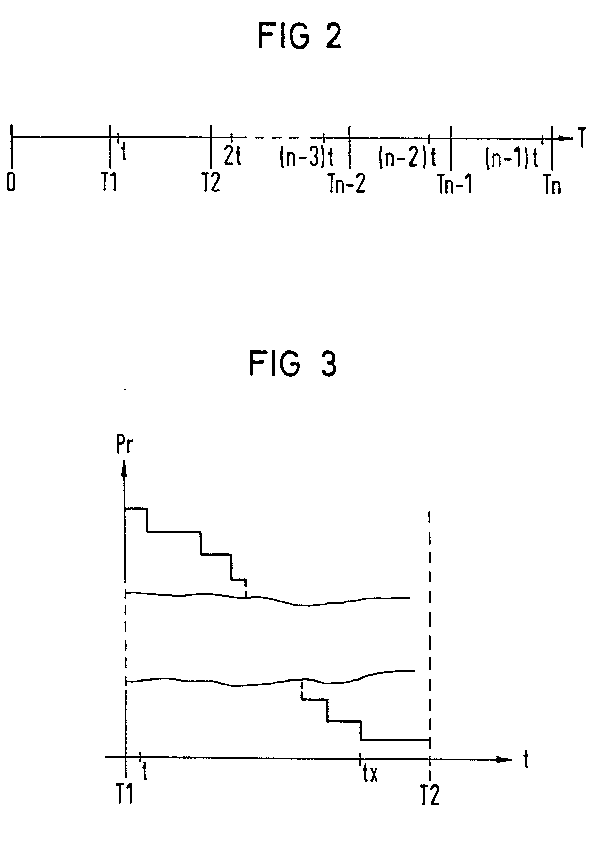

Von der genannten Speichereinheit SE ist in Fig. 1 nur der Schaltungsteil dargestellt, der der statistischen Erfassung von vermittlungstechnischen Steuerungsvorgängen dient. Dieser Schaltungsteil weist eine aus zwei Zählern Z1, Z2 und einem Register Reg1 bestehende Zähleranordnung auf. Bei dem Zähler Z1 handelt es sich dabei um einen Vorwärtszähler, dessen Zählerstand, beginnend bei «Null», im zeitlichen Abstand von 10 ms bis zu einem maximalen Zählerstand von 6250 inkrementiert wird. Der Zähler erhält hierzu einen entsprechenden Steuertakt ST1 zugeführt. Nach jedem Inkrementieren gibt dieser Zähler an seinen Zählerausgängen den jeweils gerade aktuellen Zählerstand ab. Dieser aktuelle Zählerstand wird dem Zähler Z2 zugeführt, der diesen, gesteuert durch ein von dem Zähler Z1 abgegebenes Steuersignal, als Anfangszählerstand übernimmt. Der Zählerstand des Zählers Z2, bei dem es sich um einen Rückwärtszähler handeln möge, wird, durch einen Steuertakt ST2 gesteuert, im zeitlichen Abstand von 0,0016 ms dekrementiert. Bei einem Zählerstand «Null» gibt der Zähler Z2 ein Ausgangssignal an das Register Reg1 ab. Ein solches in das Register übernommene Ausgangssignal dient, wie im folgenden noch erläutert werden wird, der Aktivierung einer Erfassungsroutine durch die Programmsteuereinheit PE. Durch die angegebenen Steuertakte ST1 und ST2 werden derartige Ausgangssignale während einer Zeitspanne von ca. 1 Minute im zeitlichen Abstand von 10,0016 ms in das Register Reg1 übernommen. In Fig. 2 ist dieses Zeitraster schematisch dargestellt. Mit T1 bis Tn sind dabei die einzelnen 10 ms-Zeitintervalle bezeichnet. Die Zeitpunkte t bis (n-1) t geben die im Abstand von 10,0016 ms aufeinanderfolgenden Zeitpunkte für die Abgabe eines Ausgangssignals an. Auf die spezielle Wahl dieses Rasters wird im folgenden noch näher eingegangen.

Der der Erfassung der vermittlungstechnischen Steuerungsvorgänge dienende Schaltungsteil der Speichereinheit SE weist ausserdem ein weiteres Register Reg2 auf, in welches Angaben bezüglich der einem gerade von der Programmsteuereinheit PE aktivierten vermittlungstechnischen Steuerungsvorgang zugeordneten Priorität eintragbar sind. Mit seinen Ausgängen ist dieses Register an eine Decordiereinrichtung DEC angeschlossen. Diese Decordiereinrichtung steuert anhand der in dem Register Reg2 gespeicherten Angaben bezüglich der einem Steuerungsvorgang zugeordneten Priorität einen der zu einer Prioritätszähleranordnung PZ1 bis PZn gehörenden Zähler an. Die in dem Register Reg2 gespeicherten Angaben werden dabei durch ein an einen Steuereingang des Registers Reg2 von der Programmsteuereinheit PE her abgegebenes Steuersignal bereitgestellt. Die Anzahl der zu der Prioritätszähleranordnung gehörenden Zähler ist gleich der Anzahl der zu berücksichtigenden Prioritäten.

Nachdem zuvor der der Aufbau der statistischen Erfassung von vermittlungstechnischen Steuerungsvorgängen dienende Schaltungsteil der Speichereinheit SE erläutert worden ist, wird nunmehr unter Bezugnahme auf die Fig. 1 bis 3 auf das Verfahren gemäss der vorliegenden Erfindung eingegangen.

Für die Übertragung von Datensignalen zwischen mit der Daten- und Fernschreibvermittlungsanlage EDS verbundenen Leitungsabschnitte ist eine Vielzahl von vermittlungstechnischen Steuerungsvorgängen erforderlich, wie z.B. Steuerungsvorgänge für einen Verbindungsaufbau, für einen Verbindungsabbau, für die Datensignalübertragung bei bestehenden Verbindungen usw.. Jedem dieser Steuerungsvorgänge wird dabei eine bestimmte Priorität für seine Aktivierung durch die Programmsteuereinheit PE zugeteilt. Der Ablauf der einzelnen Steuerungsvorgänge erfolgt in der Weise, dass für jeden durch die Programmsteuereinheit zu aktivierenden Steuerungsvorgang eine gesonderte Anforderung in einen in Fig. 1 nicht dargestellten Anforderungspuffer eingetragen wird. Die in diesen Anforderungspuffer eingetragenen Anforderungen werden innerhalb einer Zeitspanne von 10 ms durch die Programmsteuereinheit PE verarbeitet, d.h. es werden die den Anforderungen entsprechenden vermittlungstechnischen Steuerungsvorgänge in der durch die Prioritäten diese Steuerungsvorgänge vorgegebenen Reihenfolge aktiviert. In Fig. 3 ist die prioritätsabhängige Aktivierung der Steuerungsvorgänge innerhalb der vorgegebenen Zeitspanne schematisch dargestellt. Auf der Abszisse ist dabei ein Zeitintervall T2-T1 von 10 ms angegeben. Die Ordinate gibt die zu berücksichtigenden Prioritäten wieder. Aus dem Diagramm geht hervor, dass zunächst die vermittlungstechnischen Steuerungsvorgänge entsprechend ihrer Priorität aktiviert werden (bis zur Zeit tx). Danach laufen bis zum Ablauf des Zeitintervalls T2-T1 der Überwachung der Daten- und Fernschreibvermittlungsanlage EDS dienende Steuerungsvorgänge ab.

Für die statistische Erfassung der vermittlungstechnischen Steuerungsvorgänge werden nun von der in Fig. 1 dargestellten Zähleranordnung Z1, Z2 und Reg1 im zeitlichen Abstand von 10,0016 ms Ausgangssignale abgegeben. Durch diese Festlegung des zeitlichen Abstandes ist sichergestellt, dass innerhalb der Erfassungszeitspanne, hier ca. 1 Minute, sämtliche Bereiche der in Fig. 2 dargestellten 10 ms-Zeitintervalle in die Ermittlung der innerhalb der 10 ms-Zeitintervalle ablaufenden Steuerungsvorgänge einbezogen sind. Die Aktivierung der Zähleranordnung kann dabei entweder manuell durch eine entsprechende Bedienungseingabe oder automatisch in vorgegebenen Zeitabständen erfolgen. Mit den von der Zähleranordnung abgegebenen Ausgangssignalen wird die Aktivierung einer Erfassungsroutine durch die Programmsteuereinheit PE angefordert. Dieser Erfassungsroutine ist dabei eine gegenüber den Prioritäten der zu erfassender Steuerungsvorgänge höhere Priorität zugeteilt. Durch den Ablauf der Erfassungsroutine wird ein gerade ablaufender vermittlungstechnischer Steuerungsvorgang kurzzeitig unterbrochen. Dabei werden Angaben bezüglich der diesem Steuerungsvorgang zugeteilten Priorität ermittelt und in das in Fig. 1 dargestellte Register Reg2 eingetragen. Anschliessend werden diese Angaben durch ein von der Programmsteuereinheit PE abgegebenes Steuersignal der Decodiereinrichtung DEC bereitgestellt, die einen diesen Angaben entsprechenden Zähler der Prioritätszähleranordnung PZ1 bis PZn ansteuert und dabei dessen Zählerstand inkrementiert. Die Zählerstände der Zähler der Prioritätszähleranordnung werden entweder nach Ablauf der Erfassungszeitspanne, hier ca. 1 Minute, oder nach einer Mehrzahl derartiger Erfassungszeitspannen für eine Auswertung ausgelesen. Sind mehrere Erfassungszeitspannen zu berücksichtigen, so ist vorteilhafterweise eine weitere Zähleranordnung vorzusehen, deren Zählerstand mit jedem Ablauf einer Erfassungszeitspanne bis zu einem vorgegebenen Zählerstand verändert wird. Der Ablauf einer Erfassungszeitspanne wird dabei durch den Zählerstand «Null» des in Fig. 1 dargestellten Zählers Z1 angezeigt.

Vorstehend wurde der Fall betrachtet, dass die Daten- und Fernschreibvermittlungsanlage EDS, wie in Fig. 1 dargestellt, lediglich eine Programmsteuereinheit PE aufweist. Weist dagegen eine solche Daten- und Fernschreibvermittlungsanlage mehrere, jeweils lediglich einen Teil der in der Vermittlungsanlage ablaufenden Steuerungsvorgänge aktivierende Programmsteuereinheiten auf, so ist es für die dynamische Belastung der einzelnen Programmsteuereinheiten vorteilhaft, dass die bereits erwähnte Erfassungsroutine lediglich von einer der Programmsteuereinheiten aktiviert wird. Bei einer Unterbrechung eines Steuerungsvorganges in der die Erfassungsroutine aktivierenden Programmsteuereinheit gibt diese ein Steuersignal an die weitere bzw. an die weiteren Programmsteuereinheiten ab, welches dort ebenfalls zur Erfassung der Priorität des jeweils gerade ablaufenden Steuerungsvorganges bewirkt. Die in den Programmsteuereinheiten bei den einzelnen Unterbrechungen jeweils ermittelten Prioritäten werden wieder in der in Fig. 1 dargestellten Prioritätszähleranordnung PZ1 bis PZn registriert. Für die Ansteuerung der einzelnen Zähler dieser Prioritätszähleranordnung ist eine der Anzahl der in der Daten- und Fernschreibvermittlungsanlage vorhandenen Programmsteuereinheiten entsprechende Anzahl von Registern Reg2 und von Decodiereinrichtungen DEC vorzusehen. Die Ausgänge der einzelnen Decodiereinrichtungen können parallel geschaltet sein, so dass gleichzeitig mehrere Zähler der Prioritätszähleranordnung angesteuert werden können. Der Fall, dass von mehreren Decodiereinrichtungen gleichzeitig auf ein und denselben Zähler zugegriffen wird, kann nicht eintreten, da jede der Programmsteuereinheiten lediglich einen ihr zugeordneten Teil der vermittlungstechnischen Steuerungsvorgänge aktivieren kann, d.h. jede Programmsteuereinheit kann nur bestimmte Prioritäten ermitteln.

Anhand der ermittelten Verteilung der einzelnen Prioritäten lässt sich die Auslastung der Daten- und Fernschreibvermittlungsanlage EDS ermitteln. Insbesondere gibt die Verteilung der Prioritäten Aufschluss darüber, ob die Anzahl der zu der Vermittlungsanlage gehörenden, in Fig. 1 mit SAGA1 bis SAGAm bzw. mit SAGD1 bis SAGDm bezeichneten Leitungsanschlussschaltungen erhöht werden kann.

Vorstehend wurde erläutert, dass bei jeder Unterbrechung eines vermittlungstechnischen Steuerungsvorganges die diesem Steuerungsvorgang zugeteilte Priorität ermittelt und registriert wird. Es kann jedoch auch so vorgegangen werden, dass bei einer Unterbrechung eines Steuerungsvorganges die diesem zugeteilte Priorität nur dann registriert wird, wenn ein den Ablauf der Steuerungsvorgänge steuernder Befehlszähler in der jeweiligen Programmsteuereinheit zum Zeitpunkt der Unterbrechung einen innerhalb eines bestimmten Bereiches liegenden Zählerstand aufweist. Der dafür erforderliche Vergleich kann mit Hilfe einer entsprechenden Vergleicheranordnung durchgeführt werden. Die Einbeziehung des Zählerstandes des Befehlszählers in der jeweiligen Programmsteuereinheit ermöglicht es, dass die Häufigkeit des Ablaufs und damit die Effizienz bestimmter Teilvorgänge einzelner Steuerungsvorgänge ermittelt werden kann. Auf diese Weise können bestimmte Ablaufe innerhalb der Steuerungsvorgänge optimiert werden.

Zur Erläuterung des Verfahrens gemäss der vorliegenden Erfindung ist von einer Daten- und Fernschreibvermittlungsanlage ausgegangen worden. Die Anwendung dieses Verfahrens ist jedoch nicht auf derartige Vermittlungsanlagen beschränkt. Vielmehr ist dieses Verfahren in beliebigen speicherprogrammierten Fernmeldevermittlungsanlagen anwendbar, in denen vermittlungstechnische Steuerungsvorgänge entsprechend ihrer Priorität aktiviert werden.

**Patentansprüche**

1. Verfahren zur statistischen Erfassung von in einer speicherprogrammierten Fernmeldevermittlungsanlage (EDS), insbesondere einer Daten- und Fernschreibvermittlungsanlage, während einer Zeitspanne vorgegebener Dauer ablaufenden, von mindestens einem Prozessor (PE) der Fernmeldevermittlungsanlage her entsprechend ihrer Priorität aktivierten vermittlungstechnischen Steuerungsvorgängen, dadurch gekennzeichnet, dass während des Betriebs der Vermittlungsanlage mittels einer auf einer gegenüber den Prioritäten der zu erfassenden Steuerungsvorgänge höheren Priorität ablaufenden, von dem jeweiligen Prozessor her aktivierten Erfassungsroutine innerhalb der vorgegebenen Zeitspanne zu einer Vielzahl von über die Zeitspanne äquidistant verteilten Zeitpunkten der jeweils gerade ablaufende Steuerungsvorgang kurzzeitig unterbrochen wird, dass während einer solchen Unterbrechung die Priorität des gerade unterbrochenen Steuerungsvorganges ermittelt wird und dass die auf diese Weise ermittelten Prioritäten prioritätsindividuell registriert werden.

2. Verfahren nach Anspruch 1, dadurch gekennzeichnet, dass vor den der Vermittlungsanlage (EDS) zugehörigen Prozessoren (PE) jeweils lediglich ein Teil der in der Vermittlungsanlage ablaufenden Steuerungsvorgänge aktiviert wird, dass die Erfassungsroutine dabei lediglich von einem der Prozessoren aktiviert wird, dass der bzw. die weitere(n) Prozessor(en) bei einer Unterbrechung eines Steuerungsvorganges in dem einen Prozessor durch ein entsprechendes Signal zur Unterbrechung des in ihm bzw. ihnen jeweils gerade ablaufenden Steuerungsvorganges veranlasst wird bzw. werden und dass die in den Prozessoren bei den einzelnen Unterbrechungen jeweils ermittelten Prioritäten zentral registriert werden.

3. Verfahren nach Anspruch 1 oder 2, dadurch gekennzeichnet, dass bei einer Unterbrechung eines Steuerungsvorganges die diesem zugeordnete Priorität nur dann registriert wird, wenn ein den Ablauf der Steuerungsvorgänge steuernder Befehlszähler in dem jeweiligen Prozessor zum Zeitpunkt der Unterbrechung einen innerhalb eines bestimmten Bereiches liegenden Zählerstand aufweist.

4. Schaltungsanordnung zur Durchführung des Verfahrens nach Anspruch 1, dadurch gekennzeichnet, dass in der Vermittlungsanlage (EDS) eine Zähleranordnung (Z1, Z2, Reg1) vorgesehen ist, welche zu den festgelegten Zeitpunkten Steuersignale an den jeweiligen Prozessor (PE) abgibt, die diesen zur Unterbrechung des jeweils gerade ablaufenden Steuerungsvorganges veranlassen, dass mindestens ein Register (Reg2) vorgesehen ist, in welches Angaben bezüglich der einem gerade ablaufenden Steuerungsvorgang zugeordneten Priorität eintragbar sind und welches bei einer Unterbrechung des gerade ablaufenden Steuerungsvorganges zur Abgabe dieser Angaben von dem jeweiligen Prozessor (PE) her ansteuerbar ist, und dass dieses Register mit einer Adressierungseinrichtung (DEC) verbunden ist, welche anhand der von dem Register (Reg2) bereitgestellten Angaben bezüglich der einem Steuerungsvorgang zugeordneten Priorität einen diesen Angaben entsprechenden Zähler einer eine der Anzahl der zu berücksichtigenden Prioritäten entsprechende Anzahl von Zählern aufweisenden Zähleranordnung (PZ1 bis PZn) ansteuert und dabei die Erhöhung des Zählerstandes dieses Zählers bewirkt.

## Revendications

1. Procédé pour la détermination statistique de processus de commande, de la technique de commutation, qui se déroulent dans une installation de télécommunications (EDS) programmée au moyen d'une mémoire, notamment une installation de commutation de données et de télex, pendant un intervalle de temps d'une durée prédéterminée, et sont déclenchés conformément à leur priorité par au moins un processeur (PE) de l'installation de télécommunications, caractérisé par le fait que, pendant le fonctionnement de l'installation, le processus de commande respectivement en cours d'exécution est interrompu pour une brève durée de l'intervalle de temps prédéterminé, une multiplicité d'instants répartis uniformément dans cet intervalle de temps, au moyen d'un sous-programme d'acquisition exécuté avec une priorité supérieure aux priorités des processus de commande devant être enregistrés et activé à partir du processeur respectif, que, pendant une telle interruption, la priorité du processus de commande précisément interrompue est déterminée et que les priorités déterminées de cette manière sont enregistrées d'une manière individuelle.

2. Procédé suivant la revendication 1, caractérisé par le fait que seule une partie respective des processus de commande se déroulant dans le central (EDS) est activée par les processeurs (PE) associés à l'installation, que le sous-programme de détermination est activé uniquement par l'un des processeurs, que le ou les autres processeurs est ou sont amenés, dans le cas d'une interruption d'un processus de commande dans un processeur, à déclencher, au moyen d'un signal correspondant, l'interruption du processus de commande se déroulant précisément dans ce ou ces processeurs, et que les priorités déterminées respectivement dans les processeurs lors des différentes interruptions sont enregistrées d'une manière centralisée.

3. Procédé suivant la revendication 1 ou 2, caractérisé par le fait que, dans le cas d'une interruption d'un processus de commande, la priorité associée à ce processus est enregistrée uniquement lorsqu'un compteur d'instructions, qui commande le déroulement des processus de commande et est situé dans le processeur respectif, possède, à l'instant de l'interruption, un état de comptage situé dans une plage déterminée.

4. Montage pour la mise en œuvre du procédé suivant la revendication 1, caractérisé par le fait que dans le central (EDS) il est prévu un dispositif de comptage (Z1, Z2, Reg1), qui envoie au processeur concerné (P1) des signaux de commande qui amènent ce processeur à interrompre le processus de commande précisément en cours d'exécution, qu'il est prévu au moins un registre (Reg2), dans lequel des indications concernant une priorité associée à un processus de commande précisément en cours d'exécution, peuvent être introduites et qui, lors d'une interruption du processus de commande précisément en cours d'exécution, peut être commandé par la délivrance de ces indications, à partit du processeur respectif (PE), et que ce registre est relié à un dispositif d'adressage (DEC), qui, sur la base des indications préparées par le registre (Reg2) et concernant la priorité associée à un processus de commande, commande un compteur, qui correspond à ces indications, d'un dispositif de comptage (PZ1 à PZn), qui comporte un nombre de compteurs correspondant au nombre des priorités devant être prises en compte, et déclenche l'accroissement de l'état de comptage de ce compteur.

**Claims**

1. Method for statistically registering exchange control operations which run in a stored-program communications exchange (EDS), in particular in a data and telegraph exchange, during a time span of predetermined duration, and activated according to their priority by at least one processor (PE) of the communications exchange, characterized in that, during the operation of the exchange, by means of a registration routine which runs at a higher priority in comparison to the priorities of the control operations to be registered and which is activated by the respective processor, within the predetermined time span the currently running control operation in each case is interrupted briefly at a plurality of instants distributed equidistantly over the time span, in that, during such an interruption, the priority of the currently interrupted control operation is determined, and in that the priorities determined in this manner are registered individually for each priority.

2. Method according to Claim 1, characterized in that, of the processors (PE) beloning to the exchange (EDS), in each case a portion of the control operations running in the exchange is activated, in that the registration routine is activated hereby only by one of the processors, in that, when a control operation is interrupted in one processor, the further processor(s) is (are) caused by a corresponding signal to interrupt the control operation currently running therein, and in that the priorities determined in each case in the processors during the individual interrupts are centrally registered.

3. Method according to Claim 1 or 2, characterized in that, when a control operation is interrupted, the priority assigned thereto is only registered if an instruction counter controlling the sequence of the control operations has a counter status lying within a defined range in the respective processor at the instant of the interruption.

4. Circuit arrangement for carrying out the method according to Claim 1, characterized in that there is provided in the exchange (EDS) a couter arrangement (Z1, Z2, Reg1) which outputs control signals at the specified instants to the respective processor (PE), which causes the latter to interrupt the currently running control operation, in that at least one register (Reg2) is provided in which data can be entered regarding the priority assigned to a currently running control operation is interrupted, can be driven by the respective processor (PE) to output these data, and in that this register is connected to an addressing device (DEC) which, on the basis of the data provided by the register (Reg2) regarding the priority assigned to a control operation, drives a counter, corresponding to these data, of a counter arrangement (PZ1 to PZn) having a number of counters corresponding to the number of priorities to be taken into account, and thereby increments the counter status of this counter.

## 1/2

## FIG 1

2/2

FIG 2

FIG 3